# EUROPEAN PATENT APPLICATION

(11) **EP 3 017 687 A1**
(43) Date of publication of application: **11.05.2016**
(21) Application number: 15193098.9
(22) Date of filing: 05.11.2015
(51) Int. Cl.: A01G 9/02, A01G 9/10

(54) **TRAY FOR CARRYING FLOWERPOTS OR PLANTS, DIE FOR A TRAY**

(30) Priority: 06.11.2014 NL 1041037
(71) Applicant: Heupack Benelux, 5473 TC Heeswijk Dinther (NL)
(72) Inventor: Heugten, Eric Petrus, 5473TC Heeswijk Dinther (NL)
(74) Representative: Van Straaten, Joop

(57) **Abstract**

Carrier tray (1) for carrying plant pots or plants, comprising an upper panel (2), containers (3) and an edge (4) around the circumference of the upper panel (2) that extends in the direction of the underneath face of the upper panel, characterized in that the side panel (4) features a protruding reinforcement rib (6) that extends into the side panel (4) transversely to the upper panel (2) and that continues across the transition of side panel (4) to upper panel (2) up onto the upper panel (2).

## Description

The invention concerns a carrier tray for carrying plant pots or plants, featuring an upper panel, with an upper face and an underneath face, containers for plant pots provided in the upper panel, and a side panel around the circumference of the upper panel that extends in the direction of the underneath face of the upper panel.

Such a carrier tray is known from the Dutch patent specification NL2006406.

This document describes a side panel on at least two opposite sides of the upper panel whose height increases in one direction from a first end of the side panel to a second end and then decreases.

This is intended to increase the rigidity of the carrier tray or to enable thinner material to be used while maintaining the same rigidity in order to save weight or a combination of these effects.

Another example of a carrier tray is shown in the British patent specification GB 1,034,256. The figures in this document show a carrier tray where the upper panel has ribs in various patterns.

Although some effect occurs, the effect is slight. Further improvement of the carrier trays' strength, good stackability of the carrier trays and further weight reduction remain a goal to be achieved.

One objective of the invention is to provide a carrier tray of improved strength and/or reduced weight and/or improved stackability. Another objective is to provide a mould for producing a carrier tray according to the invention by means of thermoforming.

To this end, the carrier tray according to the invention is characterized in that it has a protruding reinforcement rib in the side panel extending across that side panel transversely to the plane of the upper panel and continuing across the transition from the side panel to the upper panel and up onto the upper panel, where the reinforcement rib extends transversely to the plane of the side panel such that the reinforcement rib is in the shape of a hook with the corner of the hook located at the transition from the side panel to the upper panel and the hook shape oriented transversely to the plane of the upper panel.

Such a reinforcement rib reinforces the carrier tray. This enables a thinner material to be used so that the weight can be reduced. Carrier trays are often picked up and carried by their edges and this is especially the case when picking up carrier trays with plants. If there is a great weight of plant pots in the tray, the side panel will tend to tilt and/or buckle when the tray is lifted up. The extended side panel at the positions between the containers as provided for in the prior art does strengthen the carrier tray to a certain extent, but it also increases the probability of the edge tilting or buckling when the tray is lifted, leading to the side panel of the carrier tray breaking or deforming at that point.

The carrier tray according to the invention has one or more reinforcement ribs. The ribs extend on both sides of the transition from the upper panel to the side panel. This reinforces both the side panel and the upper panel as well as the transition between these two panels. The reinforcement ribs form a hook shape that is oriented transversely to the upper panel, with the corner located at the transition between the upper panel and the side panel. The hook shape is also transverse to the side panel. This reduces the probability of the side panel tilting or buckling when the carrier tray is picked up. This enables a thinner material to be used and weight to be saved. Loss of the carrier tray due to its being damaged is reduced as well.

Since there is a reduced probability of buckling or deforming, the trays can also remain stacked properly for a longer time. Furthermore, the side panel can retain the same height along its circumference. This also improves the stackability of the carrier trays.

In a preferential embodiment, a reinforcement rib extends between two containers providing a substantial reinforcement effect.

In another embodiment, a reinforcement rib extends into a corner of the carrier tray. This reinforces the corner.

Preferably, there will be at least two reinforcement ribs in the side panel and in the upper panel between two containers and a further reinforcement rib in the upper panel that extends from one of the reinforcement ribs to the other reinforcement rib and runs transversely to the reinforcement ribs.

Such a further reinforcement rib positioned transversely to the reinforcement ribs in the upper plane increases the reinforcement effect of the ribs. A very firm structure is created.

This increases the strength of the carrier tray and a thinner material can be used to achieve the same strength and quality.

Preferably, the carrier tray features at least three reinforcement ribs between two adjacent containers.

Preferably, the carrier tray features at least two further reinforcement ribs.

Preferably, the carrier tray features a channel between two containers in the upper panel.

Preferably, the reinforcement rib(s) continue(s) into the channel in the upper panel. Preferably, the containers feature ribs in the longitudinal direction of the container.

Preferably, the side panel features two or more reinforcement ribs in the corners of the carrier tray. Preferably, these reinforcement ribs come together in a reinforcement rib on the upper panel. The bifurcated construction thus created is a very strong construction.

Preferably, the upper panel features a reinforcing edge on the outside of a container between the container and the edge of the upper panel.

Preferably, the material of the carrier tray is a plastic; preferably, the carrier tray is constructed of thermoformed plastic.

These and further aspects of the invention are described below and illustrated by means of the drawing:
The figures contained in the drawing show the following:
   Figure 1 shows a perspective view of a carrier tray according to the state of the art;
   Figure 2 shows a further example of a carrier tray according to the state of the art;
   Figures 3A and 3B are perspective views of an example of a container according to the invention;
   Figures 4 and 5 show a mould for thermoforming a carrier tray according to the invention;
   Figure 6 shows another embodiment of a carrier tray according to the invention;
   Figure 7 shows a six-container embodiment;
   Figures 8 to 19 show details of embodiments.

The figures are not drawn to scale; as a rule, like numerals denote like elements.

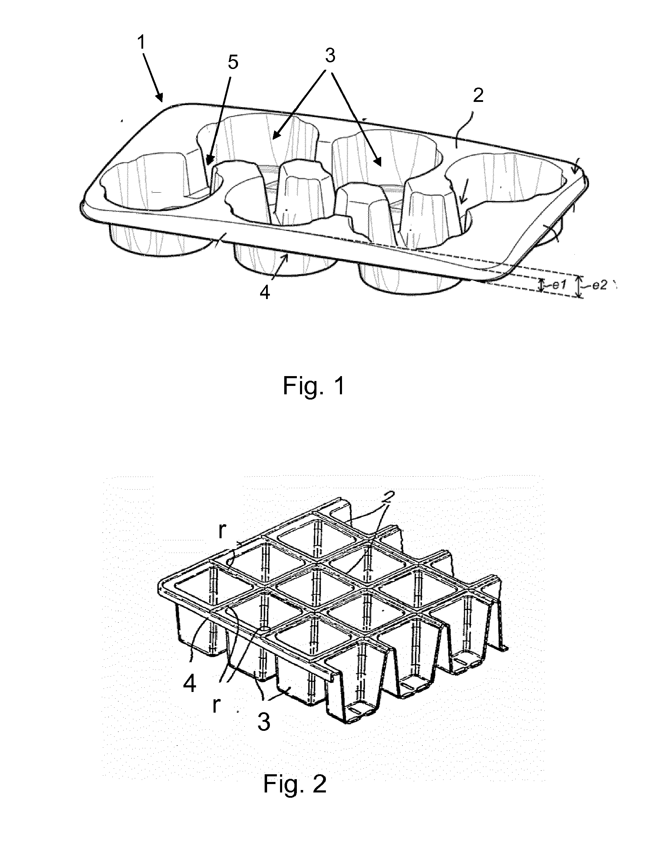

Figure 1 shows a carrier tray 1 known from the Dutch patent specification NL2006406. The carrier tray 1 features an upper panel 2. Figure 1 shows a perspective top view of the upper panel 2. The upper panel is provided with containers 3 for plant pots. Plant pots are usually placed in the containers, but placing plants directly in them is also possible. A side panel 4, extending in the direction of the underneath face of the upper panel 2, is located around the upper panel. There are channels 5 between the containers. The height of the wall 4 varies and initially increases from a height e1 to a height e2 in a direction from a first end to a second end of the side panel and then decreases from height e2 to height e1. This is intended to increase the rigidity of the carrier tray or to enable thinner material to be used while maintaining the same rigidity in order to save weight or a combination of these effects.

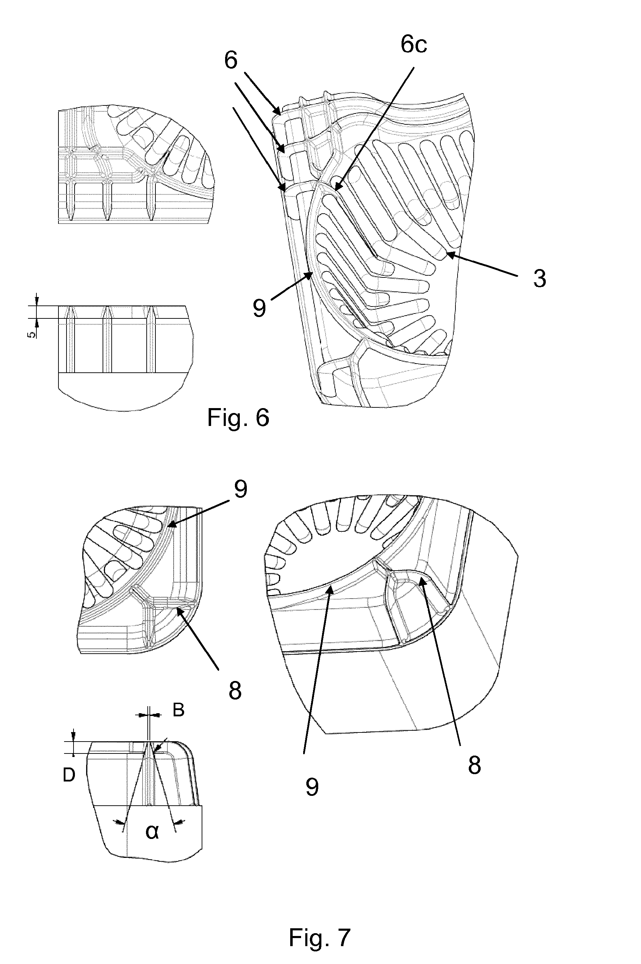

Figure 2 shows a carrier tray known from GB 1,034,256, i.e. figure 6 of that patent specification. The upper panel features a number of ribs r in a crossed pattern.

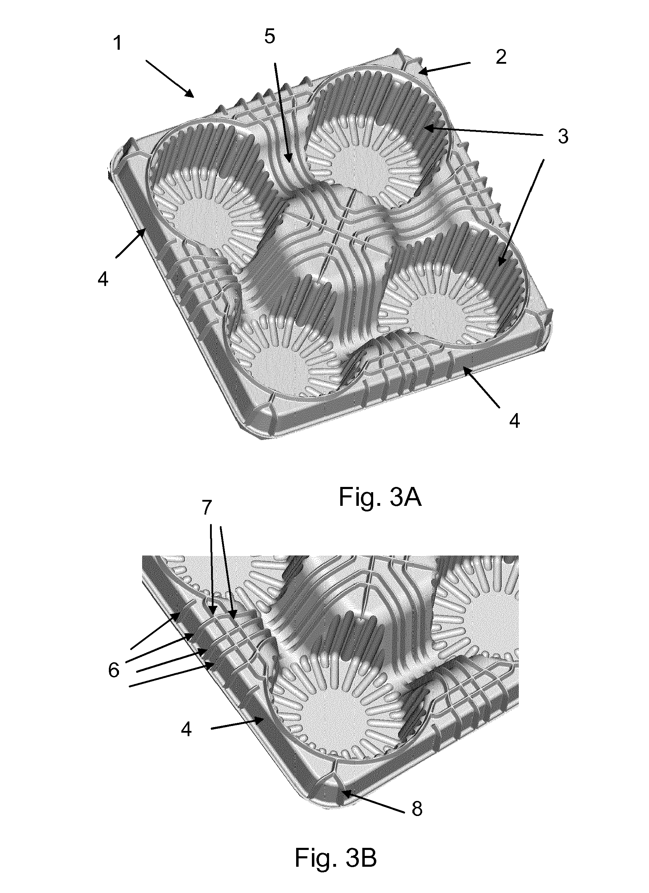

Figures 3A and 3B show a carrier tray according to the invention and a detail of a carrier tray according to the invention.

The side panel 4 features reinforcement ribs 6 in a part of the side panel between two containers 3. The reinforcement ribs 6 extend on both sides of the transition from the side panel to the upper plane and run in the sidewall 4, transversely to the plane of the upper panel 2. The reinforcement ribs 6 in the upper panel 2 run approximately transversely to the plane of the side panel 4. The reinforcement ribs are in the shape of a hook with the corner of the hook located at the transition from the side panel to the upper plane. The hook shape extends transversely to the plane of the upper panel and transversely to the side panel. The hook shape is shown in grey.

Note here that ribs r of figure 2 form hook shapes in the upper panel, i.e. where two ribs r cross, but these hook shapes extend into the plane of the upper panel and not transversely to it. This is because the ribs r do not extend across the transition from the side panel to the upper panel, but extend onto the upper panel.

The reinforcement ribs 6 give firmness to the side panel and the upper plane and prevent and/or reduce the probability of the side panel tilting or buckling when a carrier tray filled with plant pots or plants is lifted up. The ribs make the use of a thinner material possible and thus enable the weight of the carrier tray to be reduced.

Preferably, the height of a rib on the upper panel is more than 3 mm and less than 8 mm.

If the rib is too small, its reinforcement effect will be relatively minor. The higher the ribs, the thinner the material on the underside of the rib will be. This weakens the construction and leads to the risk of the rib buckling.

Preferably, the width of the rib at the highest point is less than 4 mm. Preferably, the width of the rib at 3 mm from the highest point is less than 9 mm. This creates a relatively sharp rib 6 and causes the rib 6 to be stronger than would be the case for less sharp ribs.

The rib that starts on the upper panel continues onto the side panel. Preferably, the shape of the ribs is virtually identical to those on the upper panel for a distance from the top of the rib on the side panel, for example to 7 mm from the top.

Next, the height is preferably more than 2 and preferably less than 6 mm, and the width measured at 2 mm from the highest point is preferably less than 10 mm. This makes the rib 6 less sharp than on the upper panel. This improves the stackability of the carrier trays. The ribs r of figure 2, known from the prior art according to GB 1,034,256, do not continue onto the side panel and have no, or much less, reinforcing effect than is the case with the ribs for a carrier tray according to the invention.

This example, which is also a preferred embodiment, features further reinforcement ribs 7 in the upper panel. The further reinforcement ribs join together two or more reinforcement ribs 6 and run transversely to the reinforcement ribs 6. The thickness of the material at the reinforcement ribs is approximately identical. These hollow ribs could also be called "ridges".

The reinforcement ribs 6 and/or 7 face outwards. Facing outwards means that, viewed from the upper face of the upper panel, the ribs protrude upwards. Ribs that protrude outwards are more effective in preventing the side panel and/or upper panel from tilting and buckling than reinforcement ribs that are oriented inwards.

The carrier tray in this example features six reinforcement ribs 6 between two containers and two further reinforcement ribs 7.

In this example, some reinforcement ribs - here four of the reinforcement ribs 6 - continue into the upper panel, in the channels 5, and then onwards until they are on the other side.

Furthermore, there are reinforcement ribs 8 in the corners, with every corner in this example featuring two reinforcement ribs 8 that come together in a single reinforcement rib in the upper panel 2. The reinforcement ribs 8 strengthen the carrier tray in the corners, while the bifurcated construction shown in Figures 2A and 2B provides a further reinforcing effect.

The height of the side panel 4 is preferably between 10 and 60 mm.

The width of the reinforcement ribs 6 and/or 7 and/or 8 is preferably between 3 and 10 mm; the height is preferably between 2 and 11 mm. The height-to-width ratio is preferably between 1 and 2.

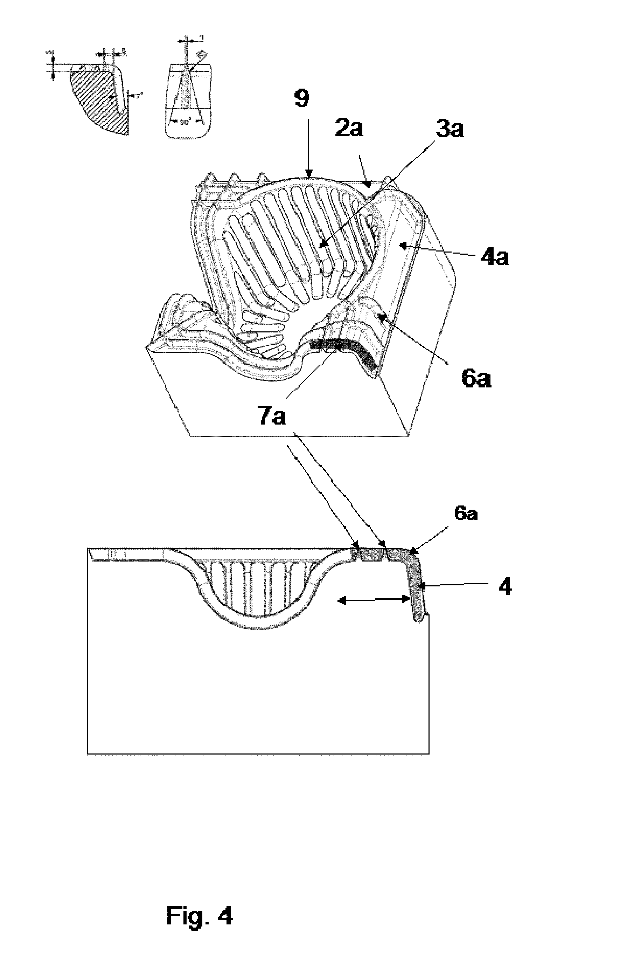

Figure 4 shows different views of part of a mould for thermoforming a carrier tray from plastic according to the invention. The mould features a plane 2a forming the upper plane 2 of the carrier tray, impression 3a creating a container 3, an edge 4a creating side panel 4, and ridges 6a and 7a creating reinforcement ribs 6 and respectively 7. In this example, the height of ridges 6a and 7a is 5 mm, and the sides of the ridges are at an angle of 30 degrees to each other. The double arrows in the figure schematically show the length of the reinforcement rib 6 on the upper panel.

Preferably, the reinforcement rib 6 extends at least 20 mm onto the upper panel. The figure also shows that the ribs extend into the side panel, then continue across the transition from the side panel to the upper panel, and then continue into the upper panel. The ribs are in the shape of a hook with the corner of the hook located at or near the transition from the side panel to the upper panel and the hook shape, i.e. the plane in which the hook shape extends, oriented transversely to the upper plane 2. The plane of the hook shape can be found by constructing a plane formed by the rib. In figure 2, every plane that is constructed by ribs r extends into or parallel to the upper plane. This shape is indicated in grey for one of the ribs. This is not intended to indicate another colour, but to accentuate the shape. The shape features two legs or arms, one on the upper panel and one on the side panel, both of which merge into each other at or near the transition from the upper panel to the side panel. The transition from the one leg to the other leg is hereafter referred to as the corner of the hook shape. This corner can feature rounded elements as illustrated in examples in further figures.

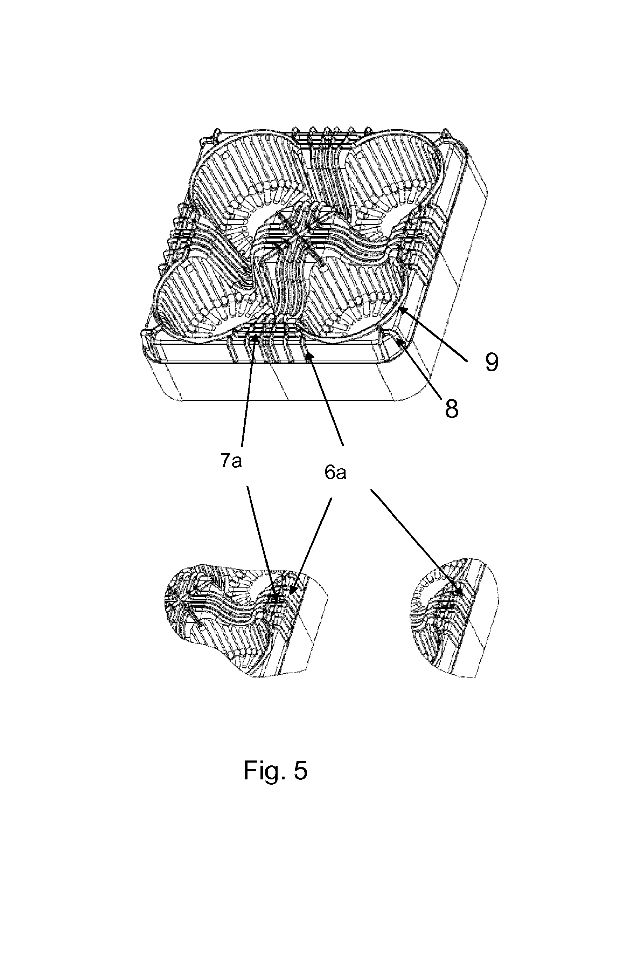

Figure 5 shows a complete mould as well as part of a mould. Figures 4 and 5 also show details of a preferred embodiment. The upper panel 2 features a reinforcing edge 9 on the edge of a container 3 between the container 3 and the edge of the upper panel. Preferably, at least some of the reinforcement ribs, ribs 8 and 7 in this example, are joined to the reinforcement edge 9.

Figure 6 shows a further example of a carrier tray or mould according to the invention. One of the reinforcement ribs 6, designated by 6c in this figure, continues into the container 3.

The point where the rib 6 stops on the upper panel 2 is a relatively weak point. If the carrier tray is subjected to a heavy load, a buckling point may occur at the end of the reinforcement rib 6. This risk is reduced by having a reinforcement rib 6 continue into the side panel of the container 3. A space has also been created here that enables water to be poured into the carrier tray when it is filled with flower pots. Note here that this reinforcing effect occurs due to the reinforcement rib 6 continuing into the container 3. This provides an added advantage to the advantage of the reinforcement rib 6 continuing onto the side panel. This aspect is produced by a carrier tray for carrying plant pots or plants featuring an upper panel, with an upper face and an underneath face, with containers for plant pots or plants being provided in the upper panel, and characterized in that the upper plane features a reinforcement rib that continues into the container. However, the combination of both aspects is greatly preferred, since the two effects reinforce each other. A reinforcement rib 6 that starts in the upper panel and extends both onto the side panel and into the container creates a construction that could be called an arch. This is a very strong construction.

Figure 7 shows a detail of an embodiment. The ribs 6 on the corner are bifurcated. This increases the strength in the corners. The ribs in this embodiment have a height D of approx. 5 mm, preferably between 2 and 11 mm. The ribs 6 preferably have a width B of approx. 1 mm, preferably 0.5 to 1.5 mm, at the top. At the base of the rib, the width is approximately equal to D, for example between 0.5D and 2D. The sides of the ribs in this embodiment are at an angle of about 30 degrees to each other, preferably between 20 and 40 degrees. When stacking the carrier trays, the ribs 6 then easily fit onto and into each other.

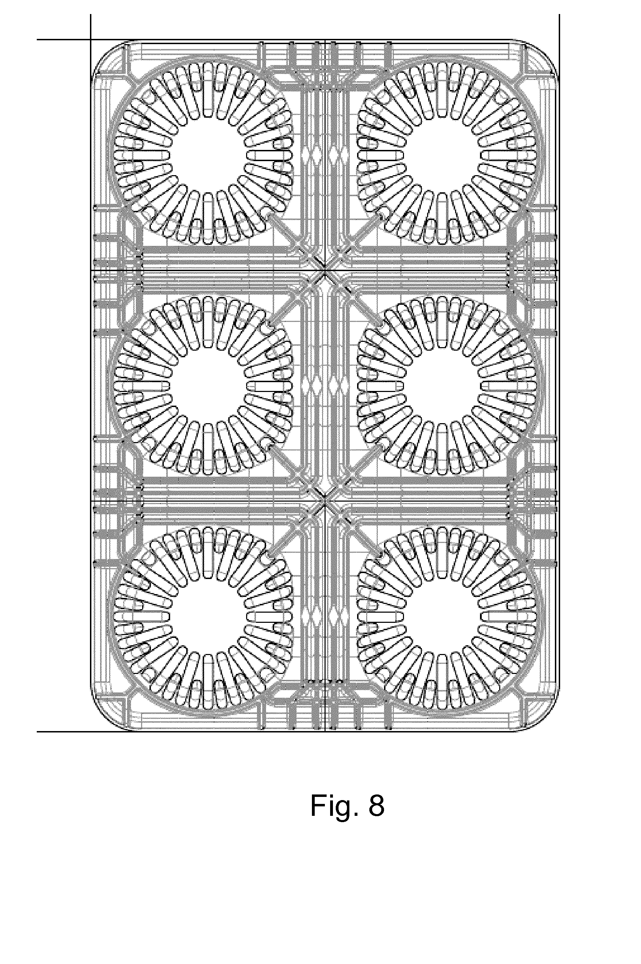

Figure 8 shows a six-pot embodiment, i.e. six containers have been formed in the carrier tray. The carrier tray can contain more containers.

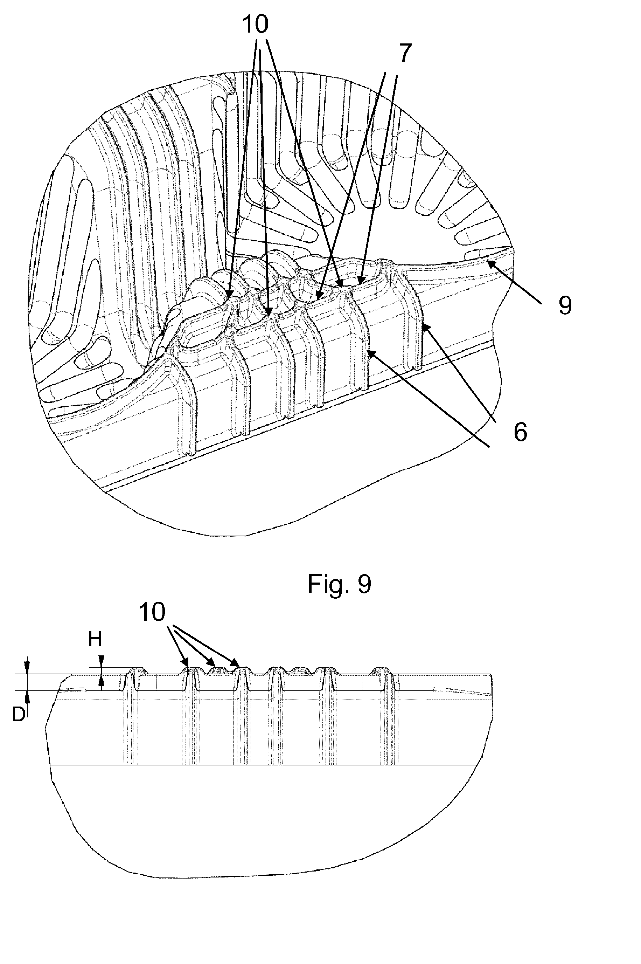

Figure 9 shows a detail of a preferred embodiment. Where a rib 6 crosses a rib 7 and possibly where a rib 6 or 7 crosses an edge 9, raised elements 10 have been applied at least where ribs, or ribs and edges, cross, but preferably at least where there is a row of points where ribs, or ribs and edges, cross, and most preferably at all points where ribs, or ribs and edges, cross. The pointed shape thus created at a point where ribs, or ribs and edges, cross has a very positive effect. The carrier tray becomes firmer, enabling a stronger carrier tray to be made with less weight. If a carrier tray is fully loaded with a lot of weight, it may buckle at a point where ribs 6 and 7 cross. The raised elements at the point where the ribs cross strengthen the carrier tray at these points and decrease the risk of buckling.

Note here that the reinforcing effect of the raised elements 10 also occurs if the ribs only extend onto the upper plane, as is the case for example in figure 2, i.e. not onto both the upper plane and the side panel. Therefore, the raised elements at the points where ribs cross are a new and inventive aspect that offers advantages because they reduce the probability of buckling and they can also be applied to prior art, apart from the aspect of the ribs extending on both the upper plane and the side panel. This aspect is formed by a carrier tray for carrying plant pots or plants featuring an upper panel, with an upper face and an underneath face, with containers for plant pots or plants, and characterized in that the upper plane features at least two crossed ribs, and by a raised element 10 being provided at the point where the reinforcement ribs 6 and 7 cross. However, the combination of both aspects is greatly preferred, since the two effects reinforce each other.

The height H of a raised element 10 is, for example, approx. 2 mm, preferably between 1 and 5 mm.

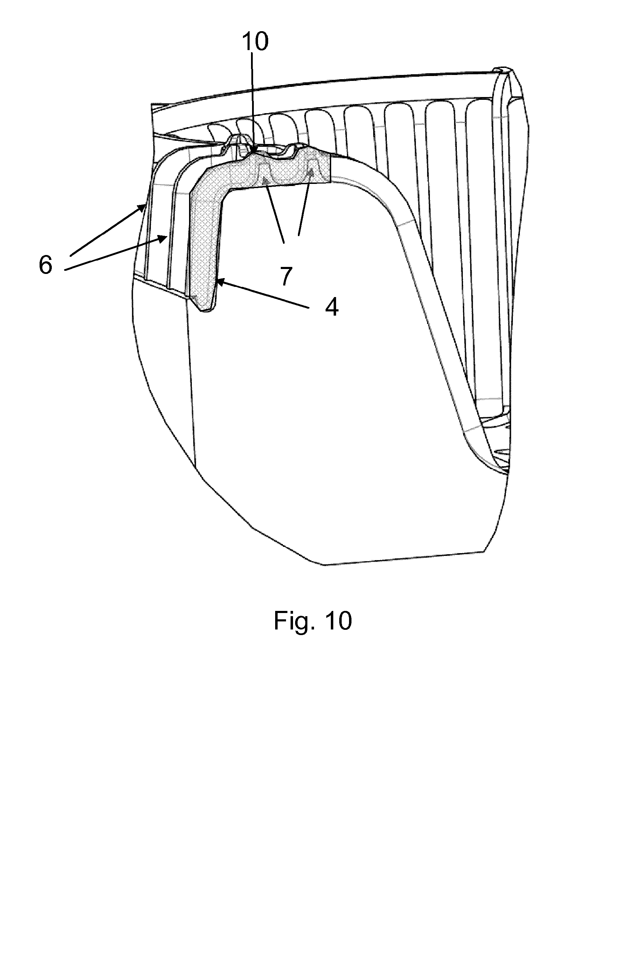

Figure 10 shows a cross-section of the raised elements 10.

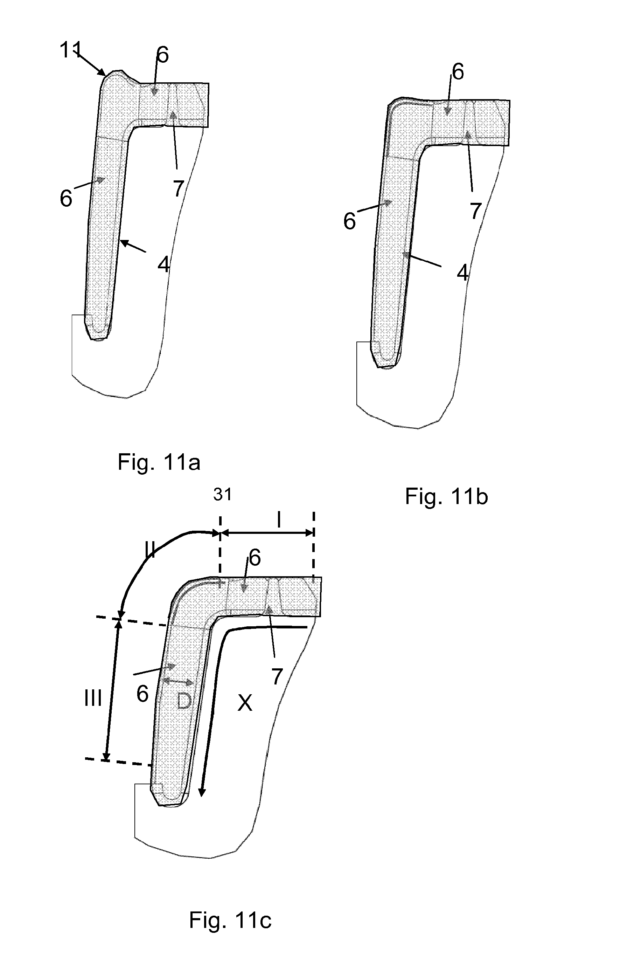

Figures 11a to 11e illustrate a number of embodiments. Figure 11a shows a reinforcement rib 6 with a raised element 11 at or near the transition from side panel 4 to upper panel 2. The height of this raised element 11 is shown schematically in the figure by means of the dotted lines between the arrows. This raised element strengthens the carrier tray. The height of the raised element is preferably between 0.5 and 3 mm.

The raised elements 11 reinforce the carrier tray at its edge.

Figure 11b does not feature a raised element 11, but the depth of the rib near the transition is still greater than on the upper plane or on the side panel. The depth of the rib is constant in figure 11c. Figures 11a to 11c schematically indicate three zones, a zone I on the upper plane, a zone II that indicates the transition from the upper panel to the side panel and a zone III that indicates the side panel. Figure 11c schematically indicates a dimension X. Figure 10d shows a graph that indicates the depth D of the rib along line X. In these figures, just as in figure 4, the shape of the rib near the transition is also accentuated by indicating it in grey. The depth D of the rib in zone I, the upper plane 2, is preferably approximately constant.

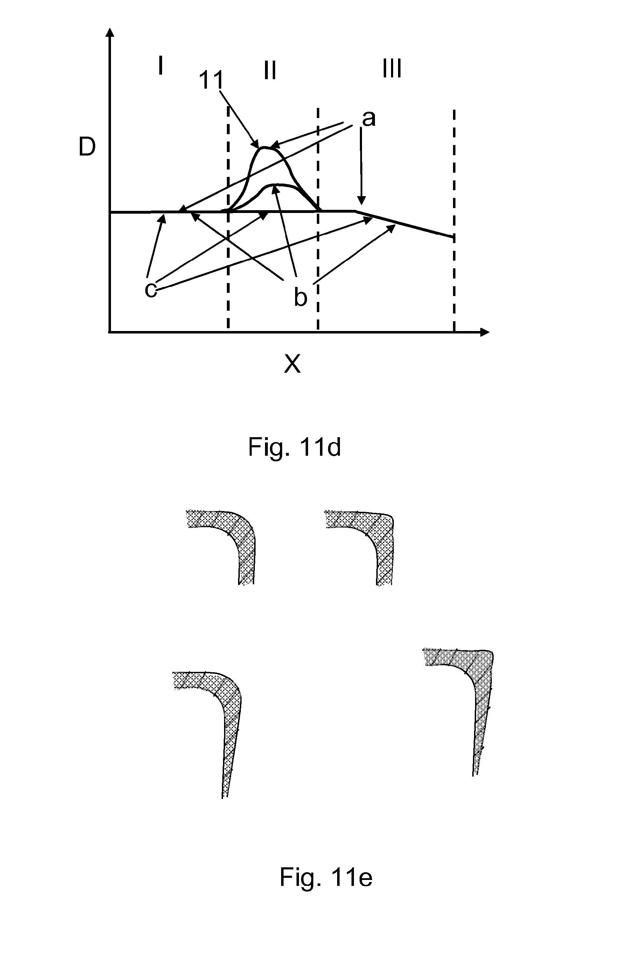

The depth D in zone II, the transition between upper plane 2 and side panel 4, i.e. over the edge, remains equal to the depth on the upper plane for the embodiment shown in figure 10c, indicated in figure 11d by line c. The depth D increases for the situation as shown in figure 11b, indicated by line b, and the depth D increases even further due to the raised element 11 in the situation of figure 11a, indicated in figure 11d by line a.

Lines a and b indicate preferred embodiments. In zone III, the side panel 4, the depth D is initially constant and then it decreases.

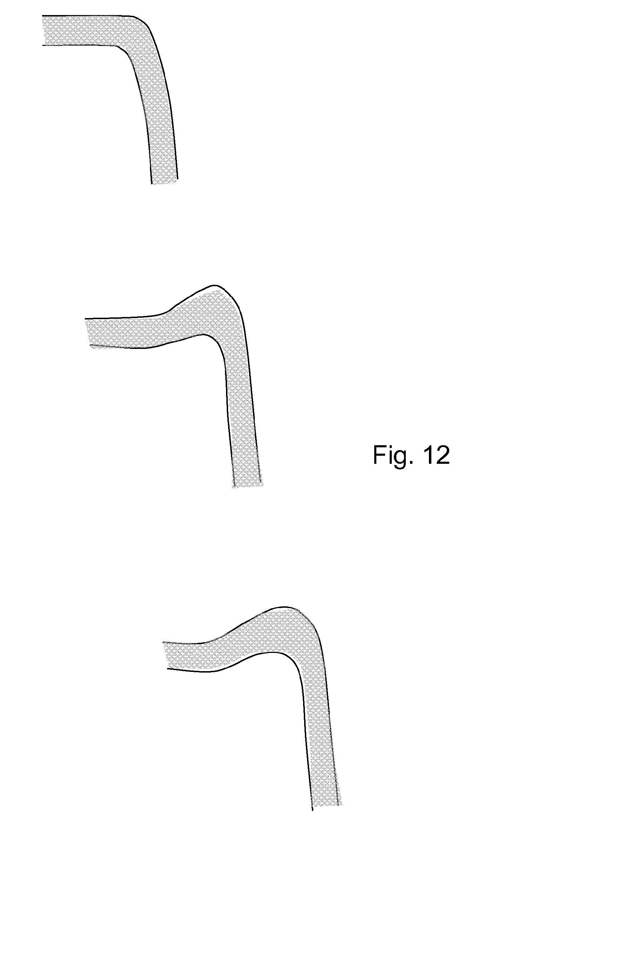

The depth D at the end of zone I and the beginning of zone II is equal in this example. In some embodiments, the depth at the end of zone I, the top plane, may be slightly more than at the beginning of zone III. The hook shape of the rib is shown in grey in the figures 10 and 11a to 11c. This hook shape features a ribbed part that extends onto or into the upper plane, and a ribbed part that extends into or onto the side panel. The hook shape extends approximately in a plane that is oriented transversely to the upper plane. Figure 11e shows different hook shapes as examples. The two arms or legs of the hook shape are approximately transverse to each other, but they do not have to be perpendicular to each other, the angle may be greater than 90 degrees, for example between 93 and 100 degrees. The angle can also be less than 90 degrees, for example between 90 and 80 degrees. Figure 12 provides more examples of rib shapes near the transition from the upper panel to the side panel.

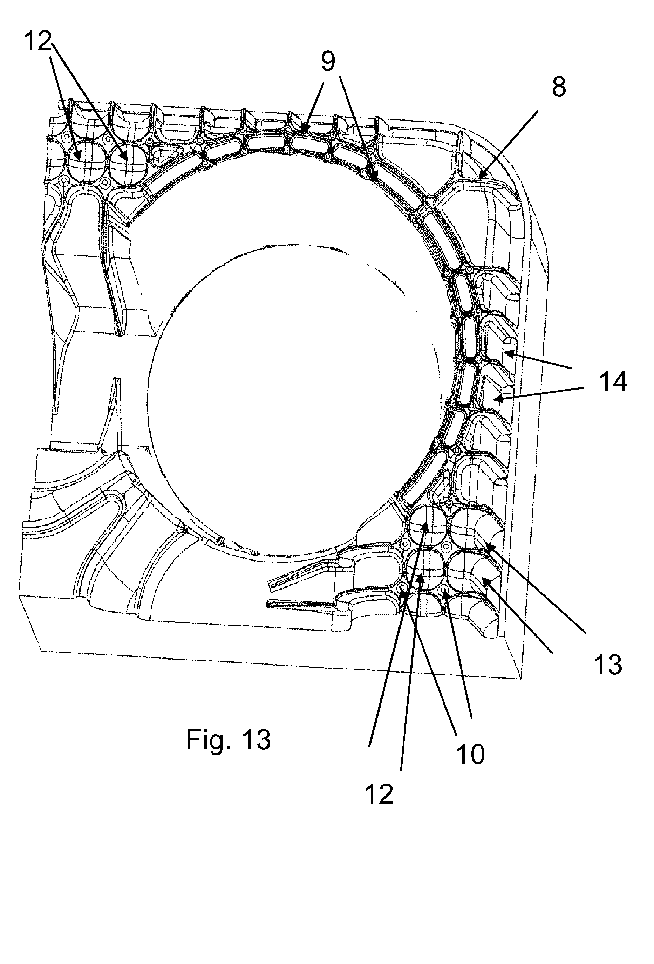

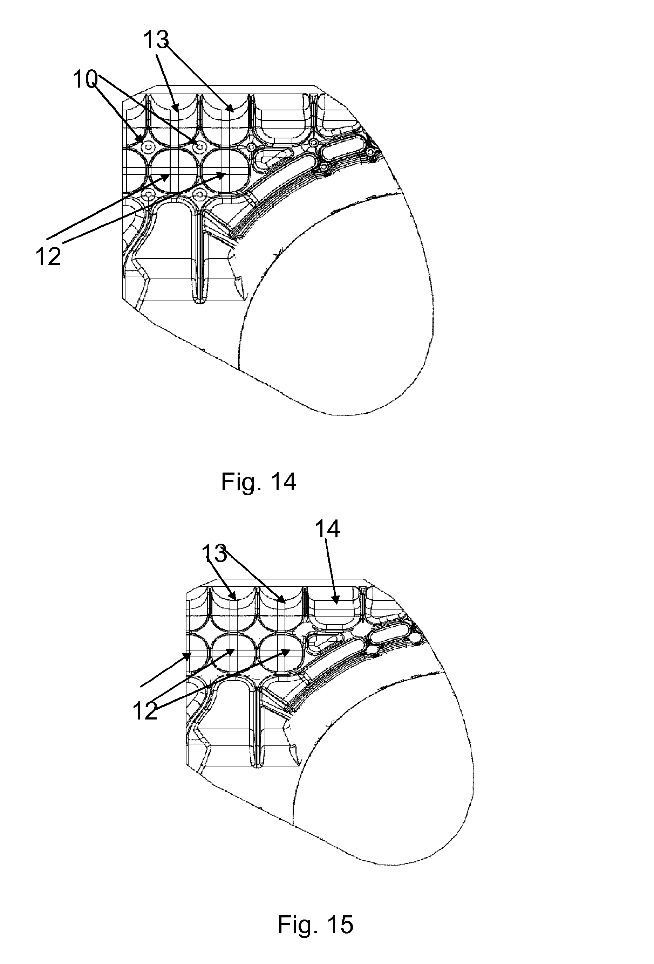

Figures 13, 14 and 15 show details of preferred embodiments. The embodiments are illustrated by means of the moulds in these examples.

The zones 12 between crossed reinforcement ribs 6 and 7 on the upper panel have an approximately semi-circular or semi-oval shape. This reinforces the upper panel. An approximately semi-circular or semi-oval shape is a very strong shape that effectively prevents buckling.

Preferably, the shape of zone 13 on the side panel between two reinforcement ribs 6 is approximately semi-circular. To enable comparison, zones 14 have also been indicated; these zones have approximately straight side panels. The radius in the corner of the side panels in these zones 14 is small, for example 1 to 3 mm with a height of 8 mm. The radius of a perfect semi-circular shape is equal to the depth of the zones and equal to half the distance between the ribs. Preferably, the minimum radius is greater than 50% of the height and most preferably it is greater than 75%. This creates an approximately circular shape between the ribs which reinforces the carrier tray. This applies both to zones between ribs 6 on the side panel and/or the upper panel, and, preferably to zones between ribs 6 and 7.

The structure on the upper panel formed by crossed raised reinforcement ribs 6 and 7 in between which cavities 12 have been formed, preferably in a semi-circular form or an ovaloid form, reinforces the upper panel. This effect occurs independently of whether the ribs 6 continue past the edge, but the combination of these two is the most effective since this reduces the risk of buckling throughout the carrier tray.

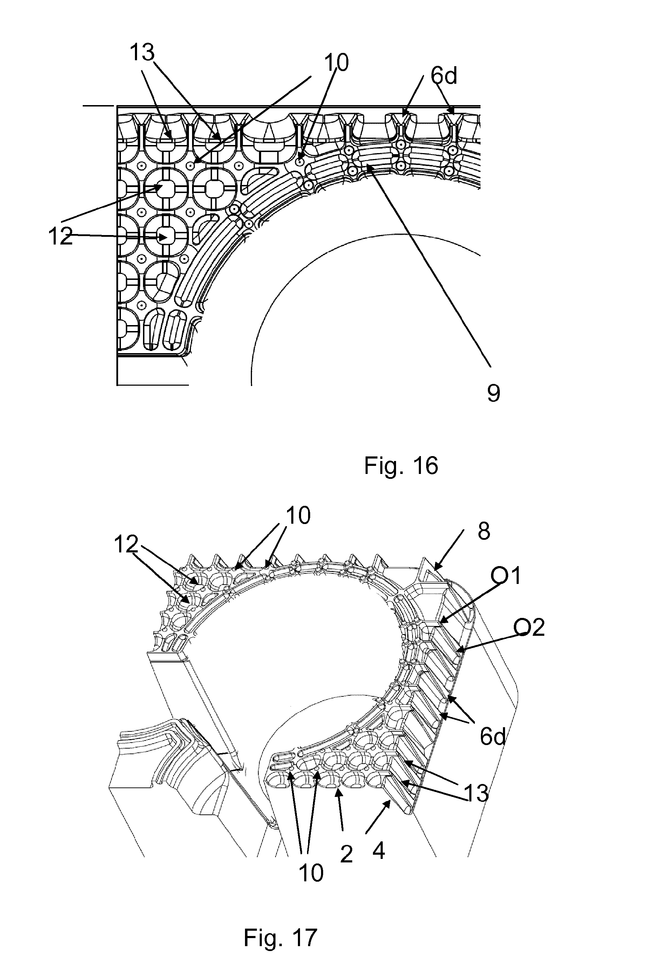

Figures 16 and 17 provide further examples of a carrier tray according to the invention.

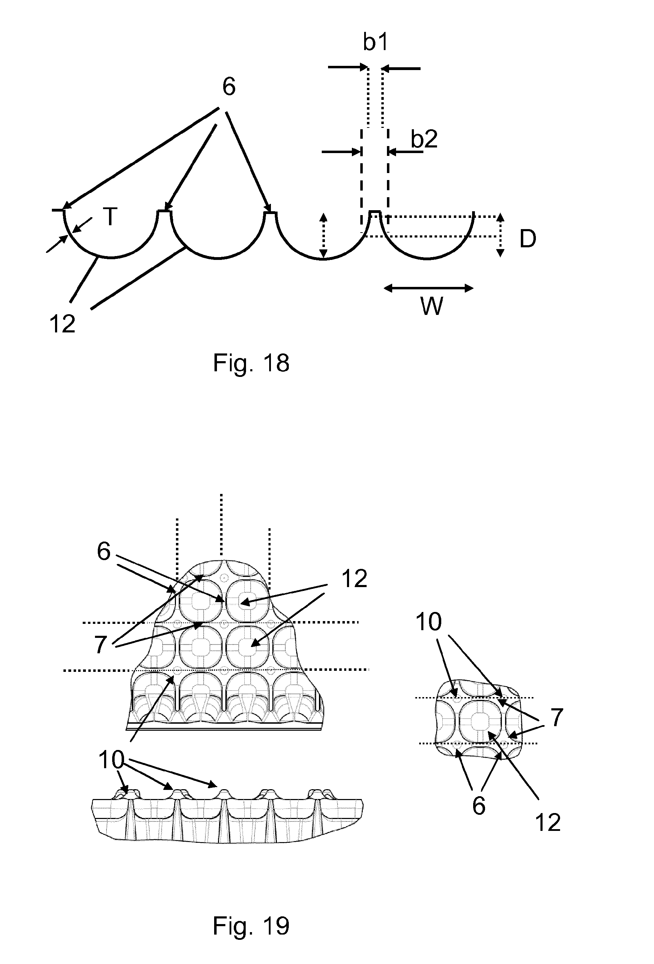

Figure 18 shows a number of preferred dimensions.

The depth D of ribs 6 and/or 7 is preferably between 2 and 11 mm, and more preferably between 3 and 8 mm.

The width b1 of the ribs 6 and/or 7 is measured near the highest point at 1/10 of the depth D. Preferably, the width b1 is less than 4 mm. I.e.:
b1 < 4mm

Preferably, b1 in the upper panel is smaller than or equal to b1 in the side panel, preferably smaller.

I.e.:
b1 (upper panel) ≥ b1 (side panel)

Preferably, the width b1 in the side panel 4 increases from the edge where the upper panel transitions to the side panel. The preferred value b1 < 4mm then applies to the first part of the side panel.

In embodiments, the width b1 can increase to values of more than 4 mm on the side panel, from the transition downwards. This is sketched schematically in figures 16 and 17. The width of the ribs 6d increases from, for example, 3 mm at point O1 to 8 mm at point 02. The reinforcement rib (6d) features a width at the top (b1) that increases from the point where the upper panel transitions into the side panel (point O1) to the end of the side panel (point 02). The reinforcement rib 6d widening at the bottom of the side panel improves the stackability of the carrier trays. The fact that the reinforcement ribs 6d, which are hollow when viewed from the bottom, widen at the bottom makes it easier to guide a carrying tray when stacking it onto an underlying carrier tray. This enables the carrier trays to be stacked well and to be detached from each other quickly and simply. As stated above, the reinforcement ribs are hollow.

Where, for example in the figures 13 and 16, the width of a rib 6 or 7 varies because two ribs cross on the upper panel, the above maximum preferred values for b1 apply to the narrowest part of a rib 6 or 7.

The width b2 of the rib(s) 6 and/or 7 is measured at 50% of the depth D. This width b2 is preferably less than 9 mm and preferably between b1+0.1D and b1+0.33D. Here also, in situations such as those shown in figures 13 and 16, where the width of a rib 6 or 7 varies because ribs 6 and 7 cross, the above maximum preferred values apply to the narrowest part of a rib 6 or 7.

Preferably, the mutual distance W between ribs on the upper panel does not exceed 17 mm. If the distance is greater it will be difficult to produce rounded shapes between the ribs 6 and/or 7.

In summary, the invention can be described as follows: Carrier tray (1) for carrying plant pots or plants, featuring an upper panel (2), containers (3) and an edge (4) around the circumference of the upper panel (2) that extends in the direction of the underneath face of the upper panel, characterized in that the side panel (4) features a protruding reinforcement rib (6) that extends into the side panel (4) transversely to the upper panel (2) and that continues across the transition of side panel (4) to upper panel (2) up onto the upper panel (2).

It will be clear that the invention enables many variations and that the invention is not limited to the examples described above.

The carrier tray is also called a tray.

Preferably, the side panel of the tray has a length of between 10mm and 60mm, measured from the transition of the side panel to the upper plane.

The thickness of the material is, for example, between 0.4 and 1 mm, for example between 0.4 and 0.6 mm, for example approx. 0.5 mm. To provide a similar strength for a carrier tray without reinforcement ribs, a material of at least 0.8 mm thick or thicker is necessary. The material thickness is indicated schematically by the letter T in figure 18.

Please note that, in schematic figures, parts are sketched schematically and this should not be considered as a restrictive representation. Schematic figures sketch matters schematically. For example, in figure 19, an upper plane of rib 6 transitions into a zone 12 that looks approximately hollow. The transition in the schematic figure is drawn as a sharp transition. In practice, the transition may be rounded a bit. Figure 19 shows a further detail of an embodiment according to the invention. Ribs 6 and 7 cross on the upper plane. Where the ribs cross, raised elements 10 have preferably been created. Preferably, the carrier tray features at least two pairs of crossed ribs 6 and 7 on its upper plane, with a cavity 12 between the four points where the transverse pairs of ribs 6 and 7 cross. This aspect has been formed by a carrier tray for carrying plant pots or plants featuring an upper panel, with an upper face and an underneath face, with containers for plant pots or plants in the upper panel, and characterized in that the upper plane features at least two crossed ribs with a cavity 12 between the crossed ribs. Preferably, the distance between the ribs is between 4 and 15 mm, and the ribs approximately form a square.

## Claims

1. Carrier tray (1) for carrying plant pots or plants, comprising an upper panel (2), with an upper face and an underneath face, containers (3) provided in the upper panel for plant pots or plants, and a side panel (4) around the circumference of the upper panel (2) that extends in the direction of the underneath face of the upper panel, **characterized in that** the side panel (4) is provided with a protruding reinforcement rib (6) that extends into the side panel (4) transversely to the plane of the upper panel (2) and that continues across the transition from the side panel (4) to the upper panel (2) and onto the upper panel (2) with the reinforcement rib (6) extending transversely to the plane of the side panel (4), so that the reinforcement rib (6) is in the shape of a hook with the corner of the hook located at the transition from the side panel (4) to the upper panel (2) and the hook shape oriented transversely to the plane of the upper panel (2).

2. Carrier tray as claimed in claim 1, **characterized in that** the corner is provided with a reinforcement rib.

3. Carrier tray as claimed in claims 1 or 2, **characterized in that** at least two reinforcement ribs (6) extend into the side panel (4) and into the upper panel (2) between two containers (3) and that a further reinforcement rib (7) has been formed in the upper panel (2), which reinforcement rib (7) extends from one of the reinforcement ribs (6) into the other reinforcement rib (6) and runs transversely to the reinforcement ribs (6).

4. Carrier tray as claimed in claim 3, **characterized in that** the carrier tray features at least two further reinforcement ribs (7).

5. Carrier tray as claimed in any one of the above claims, **characterized in that** at least one of the reinforcement ribs (6c) of the side panel continues into the container.

6. Carrier tray as claimed in claim 4, **characterized in that** the side panel has two or more reinforcement ribs in the corners of the carrier tray and that the reinforcement ribs in the corner come together on the upper panel.

7. Carrier tray as claimed in any one of the above claims, **characterized in that** the upper panel comprises a reinforcement edge (9) on an outer side of a container between the container and the edge of the upper panel.

8. Carrier tray as claimed in any one of the above claims, **characterized in that** the reinforcement rib (6) and/or any further reinforcement rib has a height (D) of between 2 and 11 mm.

9. Carrier tray as claimed in any one of the above claims, **characterized in that** the width (b1) at the top of the reinforcement ribs (6) and/or further reinforcement ribs (7) is less than 4 mm.

10. Carrier tray as claimed in any one of the above claims **characterized in that** a reinforcement rib features a width b1 and a height D and, at a midpoint of the height, a width (b2) of between b1+0.1D and b1+0.33D.

11. Carrier tray as claimed in any one of the above claims, **characterized in that** the reinforcement rib (6d) features a width at the top (b1) that increases from the transition from the upper panel and the side panel to the end of the side panel.

12. Carrier tray as claimed in any one of the above claims featuring crossed ribs with a raised element (10) being provided at the point where the ribs cross.

13. Carrier tray as claimed in any one of the above claims, **characterized in that** the carrier tray has been made from thermoformed plastic.

14. Mould for thermoforming a carrier tray as claimed in any one of the above claims.
